# EUROPÄISCHE PATENTSCHRIFT

(11) **EP 2 465 123 B1**
(45) Veröffentlichungstag und Bekanntmachung des Hinweises auf die Patenterteilung: **04.04.2018**
(21) Anmeldenummer: 10771385.1
(22) Anmeldetag: 11.10.2010
(51) Int. Cl.: H01G 4/38, H01G 4/30

(54) **ELEKTRISCHES VIELSCHICHTBAUELEMENT**
ELECTRICAL MULTILAYER COMPONENT
COMPOSANT ÉLECTRIQUE MULTICOUCHE

(30) Priorität: 12.10.2009 DE 102009049077
(43) Veröffentlichungstag der Anmeldung: 20.06.2012
(73) Patentinhaber: Epcos AG, 81669 München (DE)
(72) Erfinder: FEICHTINGER, Thomas, A-8010 Graz (AT); KRENN, Georg, A-Graz 8020 (AT)
(74) Vertreter: Epping - Hermann - Fischer
(86) Internationale Anmeldenummer: PCT/EP2010/065216
(87) Internationale Veröffentlichungsnummer: WO 2011/045281

(56) Entgegenhaltungen:
- DE-A1-102007 020 783
- JP-A- 2000 195 742
- JP-A- 2005 142 587

## Beschreibung

Aus der Druckschrift DE 10 2007 020 783 A1 ist ein elektrisches Vielschichtbauelement bekannt. In JP 2005 142587 A ist ein Vielschichtkondensator mit einer Mehrzahl von Elektrodenschichten beschrieben, die von vier verschiedenen Seitenflächen des Grundkörpers ausgehen.

Eine zu lösende Aufgabe ist es, ein auf einfache Art und Weise herstellbares elektrisches Vielschichtbauelement anzugeben, das eine hohe Integrationsdichte aufweist.

Die Aufgabe wird durch ein elektrisches Vielschichtbauelement nach Anspruch 1, durch dessen Merkmale die Erfindung definiert ist, gelöst. Vorteilhafte Ausgestaltungen des elektrischen Vielschichtbauelements sind Gegenstand von Unteransprüchen.

Es wird ein elektrisches Vielschichtbauelement mit einem monolithischen Grundkörper angegeben, das alternierend übereinander angeordnet mehrere Keramikschichten und Elektrodenschichten umfasst. Der Grundkörper weist zwei einander gegenüberliegende Stirnflächen und zwei einander gegenüberliegende Seitenflächen auf. Das elektrische Vielschichtbauelement weist eine Mehrzahl von Außenelektroden auf. Das elektrische Vielschichtbauelement weist wenigstens drei Innenelektroden auf. Jede der Innenelektroden ist jeweils einer Außenelektrode zugeordnet. Eine von einer Stirnfläche des Grundkörpers ausgehende erste Innenelektrode und wenigstens eine von einer gegenüberliegenden Stirnfläche ausgehende zweite Innenelektrode weisen einen ersten Abstand zueinander auf. Von einer Seitenfläche des Grundkörpers geht eine dritte Innenelektrode aus, die wenigstens zu der ersten Innenelektrode und zu der zweiten Innenelektrode einen zweiten Abstand aufweist.

In einer Ausführungsform des elektrischen Vielschichtbauelements sind wenigstens zwei der Innenelektroden in wenigstens einer gemeinsamen Elektrodenschicht ausgebildet.

In einer Ausführungsform des elektrischen Vielschichtbauelements überlappen sich die erste und die zweite Innenelektrode wenigstens teilweise. Die dritte Innenelektrode überlappt in einer Ausführungsform des elektrischen Vielschichtbauelements wenigstens teilweise mit der ersten oder der zweiten Innenelektrode.

Die Elektrodenfläche der ersten Innenelektrode ist in einer Ausführungsform des Vielschichtbauelements größer als die Elektrodenfläche der zweiten Innenelektrode. In einer weiteren Ausführungsform weisen die erste und die zweite Innenelektrode jeweils eine gleich große Elektrodenfläche auf.

Vorzugsweise weisen die Bereiche des ersten und des zweiten Abstandes je wenigstens eine Keramikschicht auf.

Die erste und die zweite Innenelektrode bilden mit dem zwischen der ersten und zweiten Innenelektrode liegenden Teilbereich wenigstens einer Keramikschicht eine erste elektrische Funktionseinheit.

In einer Ausführungsform des Vielschichtbauelements bildet die dritte Innenelektrode im Grenzbereich mit der zweiten Innenelektrode über den jeweiligen dazwischen liegenden Teilbereich einer oder mehrere Keramikschichten eine zweite elektrische Funktionseinheit.

In einer Ausführungsform des elektrischen Vielschichtbauelements geht von einer Seitenfläche des Grundkörpers eine vierte Innenelektrode aus, die durch einen dritten Abstand von wenigstens einer der ersten und/oder der zweiten Innenelektrode beabstandet ist und zusammen mit einem Teilbereich einer Keramikschicht zwischen der vierten Innenelektrode und wenigstens einer der ersten und/oder der zweiten Innenelektrode eine dritte elektrische Funktionseinheit begrenzt.

Die Funktionseinheiten des elektrischen Vielschichtbauelements sind ohne Berücksichtigung von Randeffekten voneinander unabhängig. Als Randeffekte werden beispielsweise elektrische Kopplungen bezeichnet, die zwischen zwei nebeneinander angeordneten dritten oder vierten Innenelektroden auftreten könnten.

In einer Ausführungsform sind die dritte und die vierte Innenelektrode in der gleichen Elektrodenschicht angeordnet, wobei die dritte und die vierte Innenelektrode entweder in der gleichen Schicht wie die erste und die zweite Innenelektrode angeordnet sind, oder mit einer der ersten oder zweiten Innenelektroden oder in einer anderen Schicht angeordnet sind.

Die dritte und die vierte Innenelektrode sind vorzugsweise so angeordnet, dass sie untereinander keine Randeffekte aufweisen. In einer Ausführungsform sind die dritte und die vierte Innenelektrode in der gleichen Elektrodenschicht angeordnet und soweit voneinander beabstandet, dass zwischen der dritten und der vierten Innenelektrode vorzugsweise keine Randeffekte auftreten, so dass zumindest näherungsweise keine elektrische Funktionseinheit zwischen der dritten und der vierten Innenelektrode gebildet ist.

In einer Ausführungsform sind die erste und die zweite Innenelektrode jeweils mit einer Außenelektrode verbunden, die auf den gegenüberliegenden Stirnflächen des Grundkörpers angeordnet sind.

In einer weiteren Ausführungsform weist das elektrische Vielschichtbauelement vorzugsweise eine symmetrische Anordnung von Innenelektroden entlang einer Längsachse des Grundkörpers auf.

Die elektrische Funktionseinheit des Vielschichtbauelements weist die Funktion eines Kondensators oder eines Varistors auf.

In einer weiteren Ausführungsform sind sowohl ein Kondensator als auch ein Varistor oder mehrere Varistoren oder mehrere Kondensatoren in einem elektrischen Vielschichtbauelement angeordnet.

In einer anderen Ausführungsform weist das elektrische Vielschichtbauelement mehrere Kondensatoren auf, wobei sich die Kapazität der ersten elektrischen Funktionseinheit, die durch die stirnseitig angeordneten erste und zweite Innenelektrode begrenzt wird, zu den Kapazitäten der weiteren elektrischen Funktionseinheiten um den Faktor 1000 unterscheidet.

In einer Ausführungsform des elektrischen Vielschichtbauelements weist die erste elektrische Funktionseinheit, die durch die stirnseitig kontaktierte erste und zweite Innenelektrode begrenzt ist, eine Kapazität auf, die vorzugsweise kleiner als ein Pikofarad (pF) ist.

In einer Ausführungsform weist das elektrische Vielschichtbauelement mehrere Kondensatoren mit unterschiedlichen Kapazitäten auf.

In einer weiteren Ausführungsform weist das Vielschichtbauelement mehrere Varistoren mit unterschiedlichen Varistorspannungen auf. Es ist jedoch auch möglich, dass das elektrische Vielschichtbauelement mehrere Kondensatoren und Varistoren mit jeweils unterschiedlichen Kapazitäten beziehungsweise mit unterschiedlichen Varistorspannungen aufweist.

In einer Ausführungsform des Vielschichtbauelements umfasst eine der Keramikschichten eine Varistorkeramik beziehungsweise eine Kondensatorkeramik. Die Varistorkeramik des elektrischen Vielschichtbauelements, die die Keramikschicht bildet, weist vorzugsweise Zinkoxid, Bismutantimon oder Zinkoxidpraseodym auf.

In einer Ausführungsform des elektrischen Vielschichtbauelements umfasst der Grundkörper wenigstens eine dielektrische Schicht, die eine niedrige Permittivität aufweist. In einer Ausführungsform begrenzen zwei dielektrische Schichten das Vielschichtbauelement in Dickenrichtung nach oben und unten.

In einer weiteren Ausführungsform des elektrischen Vielschichtbauelements ist wenigstens eine dielektrische Schicht als Zwischenschicht zwischen zwei voneinander unabhängigen Teilen des Vielschichtbauelements angeordnet. Die dielektrische Schicht weist vorzugsweise ein Glas oder einen Zirkonoxid, ein Glas-Zirkonoxid-Komposit, ein Aluminiumoxid oder ein Glas-Aluminiumoxid-Komposit auf.

Der Bereich des ersten Abstandes zwischen der ersten und zweiten Innenelektrode beziehungsweise des zweiten Abstands zwischen einer dritten Innenelektrode und der zweiten Elektrode sowie des dritten Abstands zwischen einer vierten Elektrode und der zweiten Elektrode umfasst vorzugsweise eine Keramikschicht beziehungsweise einen Teil einer Keramikschicht.

In einer Ausführungsform des elektrischen Vielschichtbauelements erfolgt die Kontaktierung mittels Land Grid Arrays (LGA) beziehungsweise Ball Grid Arrays (BGA). Der Schichtaufbau des elektrischen Vielschichtbauelements erfolgt hierbei vorzugsweise senkrecht zur Schicht der Anschlusskontakte. Die Elektrodenflächen der ersten und/oder der zweiten Innenelektrode sind in einer Ausführungsform über Außenelektroden von der Seite des Vielschichtbauelements kontaktierbar. Die dritten und vierten Innenelektroden sind über LGA- oder BGA-Kontakte auf der Unterseite des Grundkörpers kontaktierbar. In einer weiteren Ausführungsform erfolgt die Kontaktierung der ersten und/oder zweiten Innenelektrode in Form einer BGA- oder LGA-Kontaktierung auf der Unterseite des Grundkörpers.

Zur Beschaltung eines zuvor beschriebenen elektrischen Vielschichtbauelements in einer Schaltungsanordnung ist wenigstens eine erste der stirnseitig angeordneten Außenelektroden mit Masse verbunden. Wenigstens eine zweite der stirnseitig angeordneten Außenelektroden ist mit einer spannungsführenden Leitung verbunden. Die weiteren an den Seitenflächen des elektrischen Vielschichtbauelements angeordneten Außenelektroden sind vorzugsweise extern, beispielsweise mit Signalleitungen, verbunden.

Durch ein derartiges Vielschichtbauelement ist es möglich, einen hohen Integrationsgrad des Aufbaus zu erreichen, wobei in einem Bauelement Funktionseinheiten wie beispielsweise Kondensatoren mit unterschiedlichen Kapazitäten realisiert werden können. Beispielsweise kann so ein Bauelement realisiert werden, bei dem sich die Kapazitäten um den Faktor 1000 unterscheiden, also z.B. 0,1 pF (pF = Pikofarad) und 100 pF. Die erste elektrische Funktionseinheit des Vielschichtbauelements weist vorzugsweise die Funktion eines Kondensators auf, wobei dessen Kapazität vorzugsweise kleiner als 1 pF ist.

Die oben beschriebenen Gegenstände und die Anordnung werden anhand der folgenden Figuren und Ausführungsbeispiele näher erläutert.

Die nachfolgend beschriebenen Zeichnungen sind nicht als maßstabsgetreu aufzufassen. Elemente, die von gleichem Typ sind oder die die gleiche Funktion übernehmen, weisen das gleiche Bezugszeichen auf.
- Figur 1: zeigt die Anordnung von Außenelektroden in einer Ausführungsform des elektrischen Vielschichtbauelements,
- Figur 2: zeigt ein erstes Ausführungsbeispiel eines elektrischen Vielschichtbauelements mit drei Innenelektroden in verschiedenen Schnittdarstellungen,
- Figur 3: zeigt in Schnittdarstellungen ein weiteres Ausführungsbeispiel eines elektrischen Vielschichtbauelements mit vier Innenelektroden,
- Figur 4: zeigt ein weiteres Ausführungsbeispiel eines elektrischen Vielschichtbauelements mit drei Innenelektroden in verschiedenen Schnittdarstellungen,
- Figur 5: zeigt eine weitere Ausführungsform des elektrischen Vielschichtbauelements in verschiedenen Schnittdarstellungen,
- Figuren 6: bis 8 zeigen in Schnittdarstellungen weitere Ausführungsbeispiele des elektrischen Vielschichtbauelements mit vier Innenelektroden,
- Figur 9: und 10 zeigen weitere Ausführungsformen des elektrischen Vielschichtbauelements in verschiedenen Schnittdarstellungen,
- Figur 11: zeigt die Anordnung von Außenelektroden einer Ausführungsform eines elektrischen Vielschichtbauelements,
- Figur 12: zeigt eine weitere Ausführungsform des elektrischen Vielschichtbauelements in verschiedenen Schnittdarstellungen,
- Figur 13: zeigt einen schematischen Aufbau der Innenelektroden eines weiteren Ausführungsbeispiels eines elektrischen Vielschichtbauelements,
- Figur 14: zeigt schematisch den Aufbau der Innenelektroden eines weiteren Ausführungsbeispiels des elektrischen Vielschichtbauelements,
- Figuren 15: und 16 zeigen weitere Ausführungsformen des elektrischen Vielschichtbauelements in verschiedenen Schnittdarstellungen,
- Figuren 17: und 18 zeigen schematisch den Aufbau der Innenelektroden weiterer Ausführungsbeispiele des Vielschichtbauelements mit mehreren Innenelektroden,
- Figuren 19: bis 22 zeigen weitere Ausführungsformen des elektrischen Vielschichtbauelements in verschiedenen Schnittdarstellungen,
- Figur 23: zeigt einen Querschnitt durch ein elektrisches Vielschichtbauelement, wobei das Vielschichtbauelement in Dickenrichtung durch jeweils eine dielektrische Schicht abgegrenzt ist,
- Figur 24: zeigt einen Querschnitt durch eine Ausführungsform eines elektrischen Vielschichtbauelements, das mehrere dielektrische Schichten aufweist,
- Figur 25: zeigt eine Schaltungsanordnung eines Ausführungsbeispiels des elektrischen Vielschichtbauelements mit mehreren elektrischen Funktionseinheiten,
- Figur 26: zeigt die Anordnung der Außenelektroden gemäß einer Anschlussfläche eines Vielschichtbauelements, wobei an den Stirnseiten mehrere Außenelektroden angeordnet sind,
- Figuren 27 und 28: zeigen weitere Ausführungsformen des elektrischen Vielschichtbauelements in verschiedenen Schnittdarstellungen,

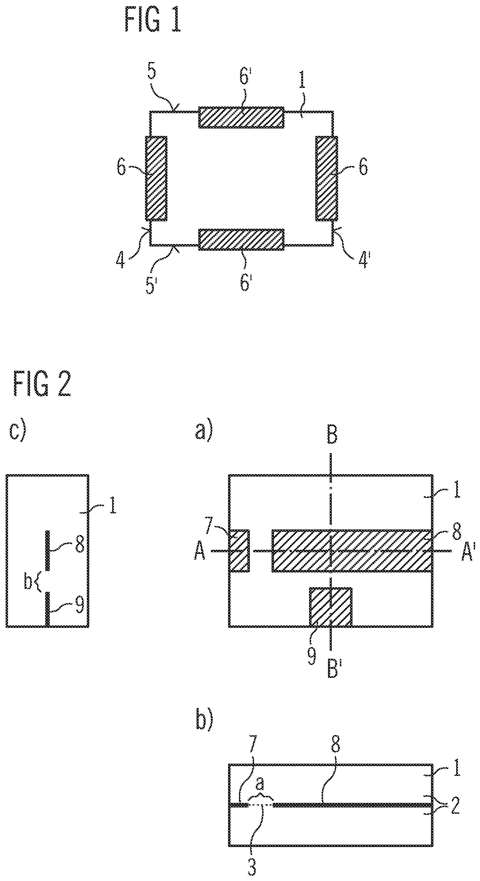

Figur 1 zeigt schematisch die Anordnung von Außenelektroden 6, 6' an einem Grundkörper 1 eines elektrischen Vielschichtbauelements aus übereinander angeordneten Keramikschichten und einer Elektrodenschicht. Figur 1 zeigt eine Ausführungsform des elektrischen Vielschichtbauelements mit vier Außenelektroden 6, 6', wobei jeweils eine Außenelektrode 6 an den Stirnseiten 4, 4' des Grundkörpers 1 angeordnet ist. An den zwei gegenüberliegenden Seitenflächen 5, 5' des Grundkörpers 1 ist jeweils eine weitere Außenelektrode 6' angeordnet. Die Ausführungsformen des elektrischen Vielschichtbauelements nach den Figuren 2 bis 11 weisen vorzugsweise eine Anordnung der Außenelektroden nach Figur 1 auf. Einzelne Außenelektroden können je nach Ausführung der Innenelektrodenanordnung unkontaktiert sein und als Blindkontakte vorliegen.

Figur 2a zeigt einen schematischen Aufbau der Innenelektrodenanordnung eines elektrischen Vielschichtbauelements aus übereinander angeordneten Keramikschichten und einer Elektrodenschicht die einen Grundkörper 1 bilden. Die Elektrodenschicht weist eine erste Innenelektrode 7 und eine zweite Innenelektrode 8 auf, wobei die erste 7 und die zweite 8 Innenelektrode derart angeordnet sind, dass sie lateral über einen ersten Abstand a voneinander beabstandet sind. Das elektrische Vielschichtbauelement weist eine dritte Innenelektrode 9 auf, die über einen zweiten Abstand b lateral von der zweiten Innenelektrode 8 beabstandet ist. Die erste Innenelektrode 7, die zweite Innenelektrode 8 und die dritte Innenelektrode 9 sind in einer Schicht des elektrischen Vielschichtbauelements angeordnet.

Figur 2b zeigt einen Schnitt durch die Elektrodenschicht entlang der Schnittachse A, A'. Das elektrische Vielschichtbauelement weist einen Grundkörper 1 auf. Das elektrische Vielschichtbauelement weist mehrere nicht dargestellte Keramikschichten 2 und die Schicht 3 auf, in der die Innenelektroden liegen.

Figur 2c zeigt einen Querschnitt durch das elektrische Vielschichtbauelement entlang der Schnittachse B, B'. Die zweite Innenelektrode 8 und die dritte Innenelektrode 9 sind in der gleichen Elektrodenschicht 3 des elektrischen Vielschichtbauelements angeordnet und über den zweiten Abstand b voneinander beabstandet.

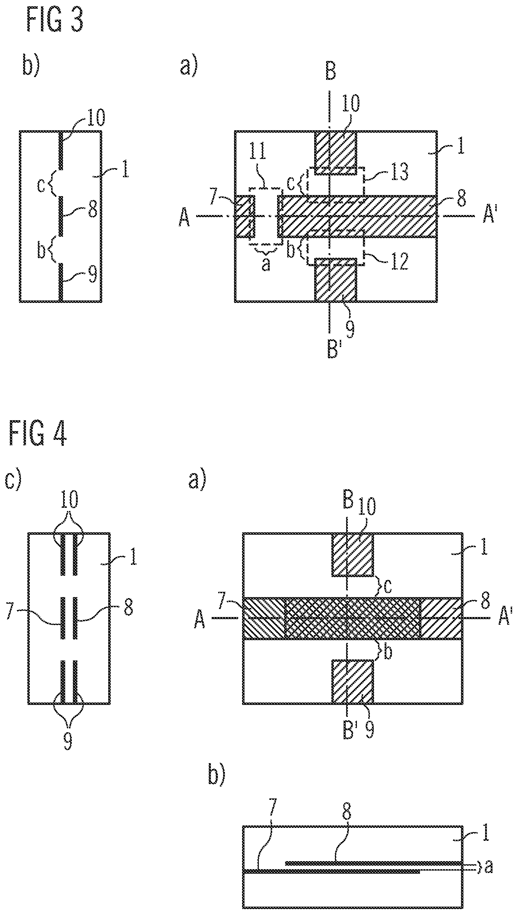

Figur 3a zeigt einen schematischen Aufbau der Innenelektroden einer weiteren Ausführungsform des elektrischen Vielschichtbauelements aus übereinander angeordneten Keramikschichten und einer Elektrodenschicht. Eine erste 7 und eine zweite 8 Innenelektrode sind voneinander durch einen ersten Abstand a in der gleichen Schicht des Grundkörpers 1 des elektrischen Vielschichtbauelements angeordnet. Das elektrische Vielschichtbauelement weist eine dritte Elektrode 9 auf, die über einen zweiten Abstand b von der zweiten Elektrode 8 beabstandet ist. Das elektrische Vielschichtbauelement weist eine vierte Innenelektrode 10 auf, die über einen dritten Abstand c von der zweiten Innenelektrode 8 beabstandet ist. Die Innenelektroden 7 bis 10 des elektrischen Vielschichtbauelements sind in der gleichen Schicht angeordnet. Im Bereich des ersten Abstandes a bildet die erste Innenelektrode 7 zusammen mit der zweiten Innenelektrode 8 und des im Bereich des ersten Abstandes a angeordneten Teilbereichs der Keramikschichten eine erste elektrische Funktionseinheit 11. Im Bereich zwischen der dritten Innenelektrode 9 und der zweiten Innenelektrode 8, die durch einen zweiten Abstand b voneinander beabstandet sind, bilden die zweite 8 und die dritte 9 Innenelektrode zusammen mit dem Teilbereich der Keramikschichten eine zweite elektrische Funktionseinheit 12. Im Bereich zwischen der zweiten Innenelektrode 8 und der vierten Innenelektrode 10 bilden die beiden Innenelektroden zusammen mit dem im dritten Abstand c angeordneten Teilbereich der Keramikschichten eine dritte elektrische Funktionseinheit 13.

Figur 3b zeigt einen Schnitt durch das Bauelement entlang der Schnittachse B, B'. Das elektrische Vielschichtbauelement zeigt im Querschnitt die zweite Innenelektrode 8, die zusammen mit der dritten Innenelektrode 9 und der vierten Innenelektrode 10 in der gleichen Schicht des Grundkörpers 1 angeordnet sind.

Figur 4a zeigt einen schematischen Aufbau der Innenelektroden einer weiteren Ausführungsform des elektrischen Vielschichtbauelements. Eine erste Innenelektrode 7 und eine zweite Innenelektrode 8 sind in der dargestellten Ausführungsform nach Figur 4a in unterschiedlichen Schichten des Grundkörpers 1 angeordnet und überlappen einander teilweise. Das elektrische Vielschichtbauelement weist zwei dritte Innenelektroden 9 auf, die in unterschiedlichen Schichten des Vielschichtbauelements angeordnet sind und, wie in Figur 4c gezeigt, einander vollständig überlappen. Die dritten Innenelektroden 9 sind von der ersten 7 und der zweiten 8 Innenelektrode über einen zweiten Abstand b beabstandet. Das elektrische Vielschichtbauelement weist zwei vierte Innenelektroden 10 auf, die analog zu den dritten Innenelektroden 9 in unterschiedlichen Schichten des elektrischen Vielschichtbauelements angeordnet sind und die einander vollständig überlappen. Die vierten Innenelektroden 10 sind jeweils über einen dritten Abstand c von der ersten Innenelektrode 7 beziehungsweise der zweiten Innenelektrode 8 beabstandet.

Figur 4b zeigt einen Schnitt durch das Bauelement entlang der Schnittachse A, A'. Die erste 7 und die zweite 8 Innenelektrode sind in unterschiedlichen Schichten des Grundkörpers 1 angeordnet, wobei zwischen ihnen ein erster vertikaler Abstand a besteht.

Figur 4c zeigt einen Schnitt durch das Bauelement entlang der Schnittachse B, B'. Das elektrische Vielschichtbauelement weist in der dargestellten Ausführungsform zwei Elektrodenschichten auf, wobei jede der Elektrodenschichten eine erste 7 beziehungsweise eine zweite 8 Elektrode sowie jeweils eine dritte 9 und eine vierte 10 Innenelektrode aufweist. Die dritten Innenelektroden 9 sind von der ersten Innenelektrode 7 und der zweiten Innenelektrode 8 lateral über den Abstand b beabstandet. Die vierten Innenelektroden 10 sind von einer ersten Innenelektrode 7 beziehungsweise einer zweiten Innenelektrode 8 lateral über den Abstand c beabstandet.

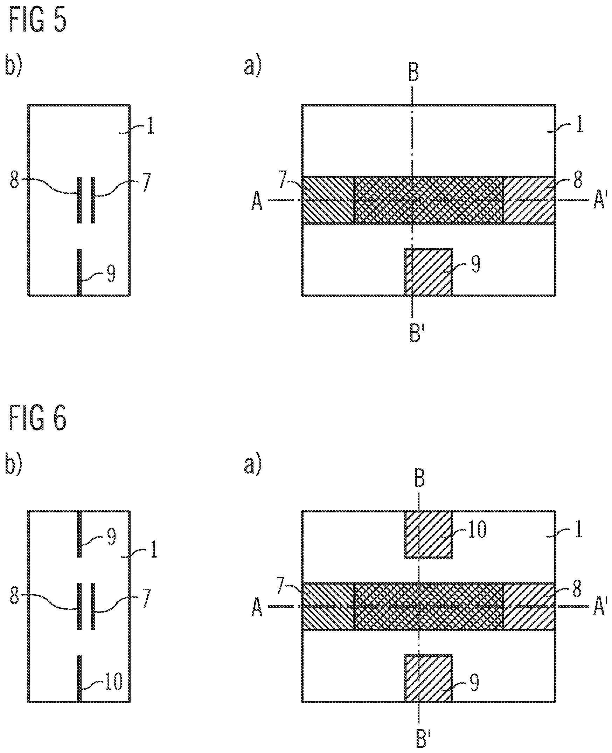

Figur 5a zeigt einen schematischen Aufbau der Innenelektrode in einer weiteren Ausführungsform des elektrischen Vielschichtbauelements. Das elektrische Vielschichtbauelement nach Figur 5a weist im Unterschied zu Figur 4a keine vierten Innenelektroden 10 und nur eine dritte Innenelektrode 9 auf. Die erste 7 und die zweite 8 Innenelektrode sind in unterschiedlichen Schichten des Grundkörpers 1 angeordnet und überlappen einander wenigstens teilweise.

Figur 5b zeigt einen Schnitt durch das Bauelement entlang der Schnittachse B, B'. Das Vielschichtbauelement weist in der dargestellten Ausführungsform eine dritte Innenelektrode 9 auf, die zusammen mit der zweiten Innenelektrode 8 in einer Elektrodenschicht des Grundkörpers 1 angeordnet ist. Die erste Innenelektrode 7 überlappt in einer beabstandeten Elektrodenschicht wenigstens teilweise mit der zweiten Innenelektrode 8.

Figur 6a zeigt einen schematischen Aufbau der Innenelektroden in einer weiteren Ausführungsform des elektrischen Vielschichtbauelements, wobei das Vielschichtbauelement einen Grundkörper 1 mit einer ersten 7 und einer zweiten 8 Innenelektrode aufweist, wobei sich die erste 7 und die zweite 8 Innenelektrode wenigstens teilweise überlappen. Das elektrische Vielschichtbauelement weist eine dritte Innenelektrode 9 und eine vierte Innenelektrode 10 auf. Die dritte 9 und die vierte 10 Innenelektrode sind in der gleichen Elektrodenschicht wie die zweite Innenelektrode 8 angeordnet.

In Figur 6b ist ein Schnitt durch das Bauelement entlang der Schnittachse B, B' dargestellt. Die zweite Innenelektrode 8 ist zwischen einer dritten 9 und einer vierten Innenelektrode 10 angeordnet, wobei die zweite Innenelektrode 8 von der dritten 9 und der vierten 10 Innenelektrode lateral beabstandet ist. Die zweite Innenelektrode 8 überlappt mit der ersten Innenelektrode 7 und ist von dieser vertikal beabstandet.

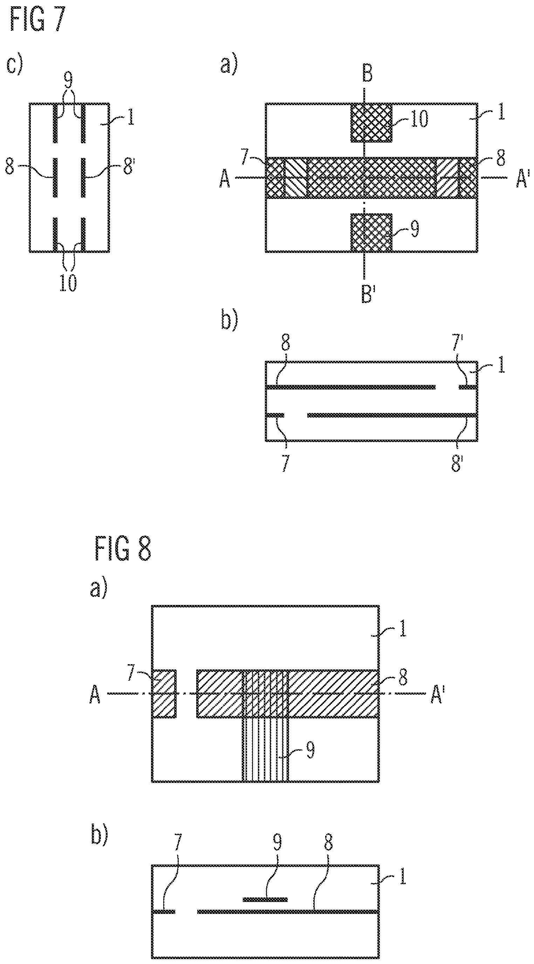

Figur 7a zeigt schematisch einen Aufbau der Innenelektrode in einer weiteren Ausführungsform des elektrischen Vielschichtbauelements. In der dargestellten Ausführungsform weist der Grundkörper 1 des elektrischen Vielschichtbauelements zwei erste Innenelektroden 7, 7' und zwei zweite Innenelektroden 8, 8' auf. Jeweils eine erste Innenelektrode 7, 7' ist mit einer zweiten Innenelektrode 8, 8' in der gleichen Schicht angeordnet und überlappt mit einer der weiteren zweiten Innenelektroden 8, 8'. Das elektrische Vielschichtbauelement weist in der dargestellten Ausführungsform zwei dritte Innenelektroden 9 und zwei vierte Innenelektroden 10 auf, die von den ersten 7, 7' und zweiten 8, 8' Innenelektroden des elektrischen Vielschichtbauelements beabstandet sind.

Figur 7b zeigt einen Schnitt durch das Bauelement entlang der Schnittachse A, A'. Die ersten Innenelektroden 7, 7' bilden mit der in derselben Schicht angeordneten zweiten Innenelektrode 8, 8' eine elektrische Funktionseinheit des Vielschichtbauelements. Die einander überlappenden zweiten Innenelektroden 8, 8' können in einem größeren Abstand zueinander angeordnet sein, als für eine gegebenenfalls durch die zweiten Innenelektroden 8, 8' gebildete weitere elektrische Funktionseinheit vorzusehen wäre.

Figur 7c zeigt einen Schnitt durch das Bauelement entlang der Schnittachse B, B'. Die zwei zweiten Innenelektroden 8, 8' überlappen einander, wobei jede der zweiten Innenelektroden 8, 8' mit einer der dritten 9 und einer der vierten 10 Innenelektroden in der gleichen Schicht des Grundkörpers 1 angeordnet sind und von diesen lateral beabstandet ist.

Figur 8a zeigt den schematischen Aufbau der Innenelektroden in einer weiteren Ausführungsform des elektrischen Vielschichtbauelements. Eine erste 7 und eine zweite 8 Innenelektrode sind in der gleichen Elektrodenschicht des Grundkörpers 1 angeordnet und voneinander lateral beabstandet. Das Vielschichtbauelement weist eine dritte Innenelektrode 9 auf, die sich von einer Seitenfläche des Grundkörpers 1 erstreckt und mit der zweiten Innenelektrode 8 überlappt. Die zweite Innenelektrode 8 und die dritte Innenelektrode 9 sind in unterschiedlichen Elektrodenschichten des elektrischen Vielschichtbauelements angeordnet.

Figur 8b zeigt einen Schnitt durch das Bauelement entlang der Schnittachse A, A'.

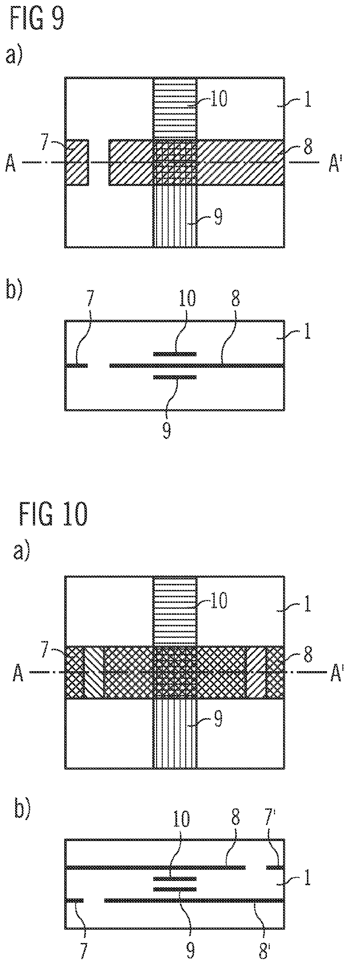

Figur 9a zeigt einen schematischen Aufbau der Innenelektroden einer weiteren Ausführungsform des elektrischen Vielschichtbauelements. Im Vergleich zu der Ausführungsform in Figur 8a, weist das elektrische Vielschichtbauelement in Figur 9a eine zusätzliche vierte Innenelektrode 10 auf. Die vierte Innenelektrode 10 überlappt mit der zweiten Innenelektrode 8 sowie mit der dritten Innenelektrode 9. Die dritte 9 und vierte 10 Innenelektrode erstrecken sich von gegenüberliegenden Seitenflächen des elektrischen Vielschichtbauelements und sind in unterschiedlichen Elektrodenschichten angeordnet.

Figur 9b zeigt einen Schnitt durch das Bauelement entlang der Schnittachse A, A'. Die erste 7 und die zweite 8 Innenelektrode sind in der gleichen Elektrodenschicht des Grundkörpers 1 angeordnet. Die erste 7 und die zweite 8 Innenelektrode sind in der dargestellten Ausführungsform in vertikaler Dickenrichtung des elektrischen Vielschichtbauelements zwischen der dritten 9 und der vierten 10 Innenelektrode angeordnet.

Figur 10a zeigt schematisch den Aufbau der Innenelektroden einer weiteren Ausführungsform des elektrischen Vielschichtbauelements. Das elektrische Vielschichtbauelement weist einen Aufbau der Innenelektroden 7, 8 auf, der der in Figur 7 dargestellten Ausführungsform des elektrischen Vielschichtbauelements ähnelt. Das elektrische Vielschichtbauelement nach Figur 10a, weist jeweils zwei erste 7, 7' und zwei zweite 8, 8' Innenelektroden auf, wobei jeweils eine erste 7, 7' und eine zweite 8, 8' Innenelektrode in der gleichen Elektrodenschicht des Grundkörpers 1 angeordnet sind.
Figur 10b zeigt einen Schnitt durch das Bauelement entlang der Schnittachse A, A'. Die ersten Innenelektroden 7, 7' sind jeweils in einer Schicht des Grundkörpers 1 mit einer zweiten Innenelektrode 8, 8' angeordnet und überlappen wenigstens teilweise mit einer weiteren zweiten Innenelektrode 8 in einer weiteren Schicht des Grundkörpers 1. Die zweiten Innenelektroden 8, 8' überlappen einander wenigstens teilweise. Die zweiten Innenelektroden 8, 8' überlappen jeweils mit einer dritten 9 und einer vierten 10 Innenelektrode des elektrischen Vielschichtbauelements. Die dritte 9 und die vierte 10 Innenelektrode sind in unterschiedlichen Schichten des Grundkörpers 1 angeordnet und in der dargestellten Ausführungsform zwischen den Schichten der zwei zweiten Innenelektroden 8, 8' angeordnet.

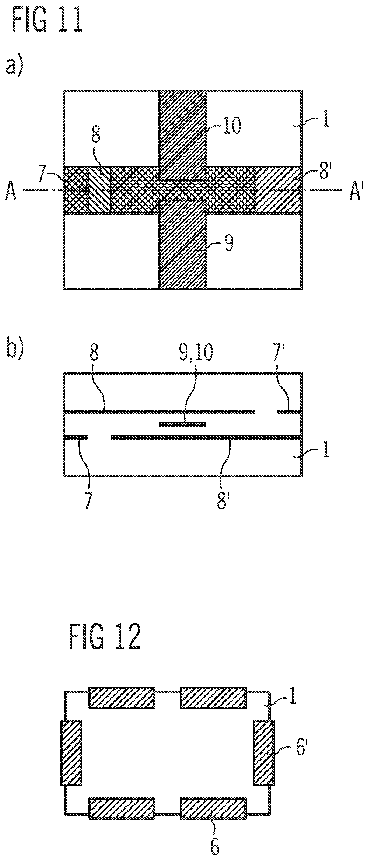

Figur 11a zeigt schematisch den Aufbau der Innenelektroden einer weiteren Ausführungsform des elektrischen Vielschichtbauelements, wobei der Aufbau des elektrischen Vielschichtbauelements in Figur 11 dem Aufbau des elektrischen Vielschichtbauelements nach der Ausführungsform in Figur 10a ähnelt. Die dritte 9 und die vierte 10 Innenelektrode des elektrischen Vielschichtbauelements nach Figur 10a sind jedoch in der gleichen Elektrodenschicht des Grundkörpers 1 angeordnet.

Figur 11b zeigt einen Schnitt durch das Bauelement entlang der Schnittachse A, A'. Jeweils eine erste Innenelektrode 7, 7' ist zusammen mit einer zweiten Innenelektrode 8, 8' in einer Elektrodenschicht des Grundkörpers 1 angeordnet, wobei jede der ersten Innenelektroden 7, 7' jeweils mit einer weiteren zweiten Innenelektrode 8, 8' in einer weiteren Elektrodenschicht überlappt. Zwischen den ersten 7, 7' und zweiten 8, 8' Innenelektroden sind eine dritte 9 und eine vierte 10 Innenelektrode angeordnet, die jeweils wenigstens teilweise mit den zweiten Innenelektroden 8, 8' überlappen. Die dritte 9 und die vierte 10 Innenelektrode sind in der gleichen Elektrodenschicht angeordnet und voneinander beabstandet.

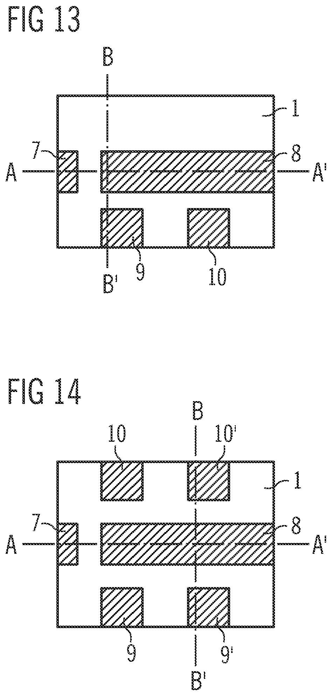

Figur 12 zeigt schematisch die Anordnung von Außenelektroden 6, 6' an einem Grundkörper 1 eines elektrischen Vielschichtbauelements. Das elektrische Vielschichtbauelement weist sechs Außenelektroden 6, 6' auf, wobei zwei Außenelektroden 6 an den Stirnseiten 4, 4' des Grundkörpers 1 angeordnet sind. An zwei gegenüberliegenden Seitenflächen 5, 5' des Grundkörpers 1 sind jeweils zwei weitere Außenelektroden 6' angeordnet. Die Ausführungsformen des elektrischen Vielschichtbauelements nach den Figuren 13 bis 24 weisen vorzugsweise eine Anordnung der Außenelektroden nach Figur 12 auf. Einzelne Außenelektroden können je nach Ausführung der Innenelektrodenanordnung unkontaktiert sein und als Blindkontakte vorliegen.

Figur 13 zeigt einen schematischen Aufbau der Innenelektroden einer weiteren Ausführungsform eines elektrischen Vielschichtbauelements. Das elektrische Vielschichtbauelement weist eine erste 7 und eine zweite 8 Innenelektrode auf, die in der gleichen Elektrodenschicht des Grundkörpers 1 angeordnet sind und lateral voneinander beabstandet sind. In der gleichen Elektrodenschicht wie die erste 7 und die zweite 8 Innenelektrode sind zwei dritte Innenelektroden 9, 9' angeordnet, die sich von einer Seitenfläche des Grundkörpers 1 erstrecken und von der zweiten Innenelektrode 8 lateral beabstandet sind. Die Draufsicht auf einen Schnitt durch die Elektrodenschicht entlang der Schnittachse A-A' entspricht der Figur 2b, der Schnitt entlang der Schnittachse B-B' entspricht der Figur 2c.

Figur 14 zeigt schematisch den Aufbau der Innenelektroden eines weiteren Ausführungsbeispiels des elektrischen Vielschichtbauelements. Das elektrische Vielschichtbauelement weist zwei vierte Innenelektroden 10, 10' auf, die in der gleichen Elektrodenschicht wie die erste 7 und die zweite 8 Innenelektrode sowie die dritten Innenelektroden 9, 9' angeordnet sind. Die vierten Innenelektroden 10, 10' sind von der zweiten Innenelektrode 8 beabstandet. Einen Schnitt durch das Bauelement entlang der Schnittachse A-A' entspricht der Figur 2b, ein Schnitt durch entlang der Schnittachse B-B' entspricht der Figur 3b.

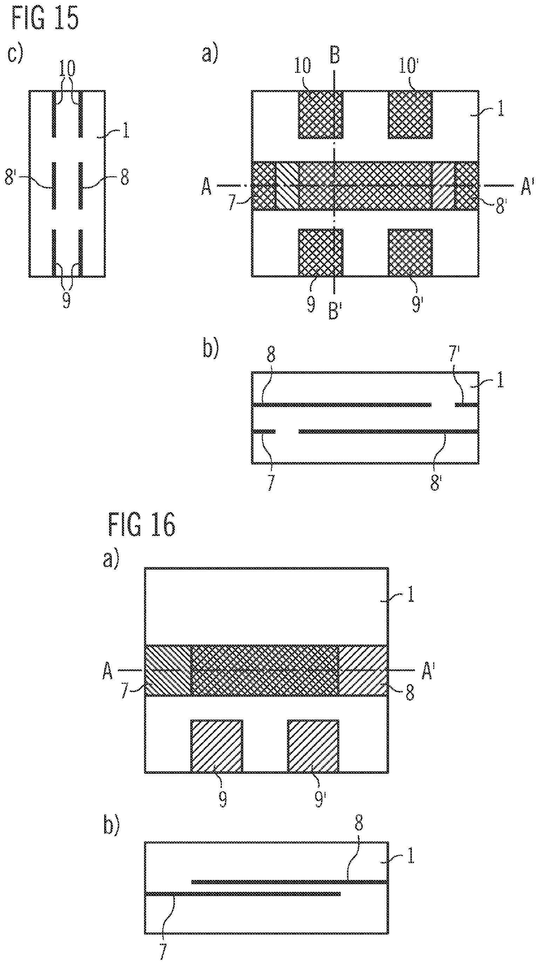

Figur 15a zeigt schematisch den Aufbau der Innenelektroden einer weiteren Ausführungsform des elektrischen Vielschichtbauelements. Das elektrische Vielschichtbauelement weist einen Grundkörper 1 mit zwei ersten 7, 7' und zwei zweiten 8, 8' Innenelektroden auf. Von den Seitenflächen des Grundkörpers erstrecken sich jeweils vier dritte 9, 9' und vier vierte 10, 10' Innenelektroden. Jeweils eine erste 7, eine zweite 8', eine dritte 9 und eine vierte 10 Innenelektrode sind in der gleichen Schicht angeordnet.

Figur 15b zeigt einen Schnitt durch das Bauelement entlang der Schnittachse A, A'. Das elektrische Vielschichtbauelement weist zwei erste Innenelektroden 7, 7' auf, die jeweils in einer Schicht mit einer zweiten Innenelektrode 8, 8' angeordnet sind. Die ersten Innenelektroden 7, 7' überlappen jeweils mit einer weiteren zweiten Innenelektrode 8, 8' in einer weiteren Elektrodenschicht des Grundkörpers 1. Die ersten Innenelektroden 7, 7' bilden mit der in derselben Schicht angeordneten zweiten Innenelektrode 8, 8' eine elektrische Funktionseinheit des Vielschichtbauelements. Die einander überlappenden zweiten Innenelektroden 8, 8' können in einem größeren Abstand zueinander angeordnet sein, als für eine gegebenenfalls durch die zweiten Innenelektroden 8, 8' gebildete weitere elektrische Funktionseinheit vorzusehen wäre.

Figur 15c zeigt einen Schnitt durch das Bauelement entlang der Schnittachse B, B'.

Figur 16a zeigt den schematischen Aufbau der Innenelektrode einer weiteren Ausführungsform des elektrischen Vielschichtbauelements. Die erste 7 und die zweite 8 Innenelektrode sind in unterschiedlichen Schichten des Grundkörpers 1 angeordnet und überlappen einander wenigstens teilweise. Das elektrische Vielschichtbauelement weist zwei dritte Innenelektroden 9, 9' auf, die sich von einer Seitenfläche des Grundkörpers 1 erstrecken und in der gleichen Elektrodenschicht wie die zweite Innenelektrode 8 angeordnet sind. Die zwei dritten Innenelektrode 9, 9' sind jeweils voneinander und von der zweiten Innenelektrode 8 lateral beabstandet.

Figur 16b zeigt einen Schnitt durch das Bauelement entlang der Schnittachse A, A', der der Figur 4b entspricht.

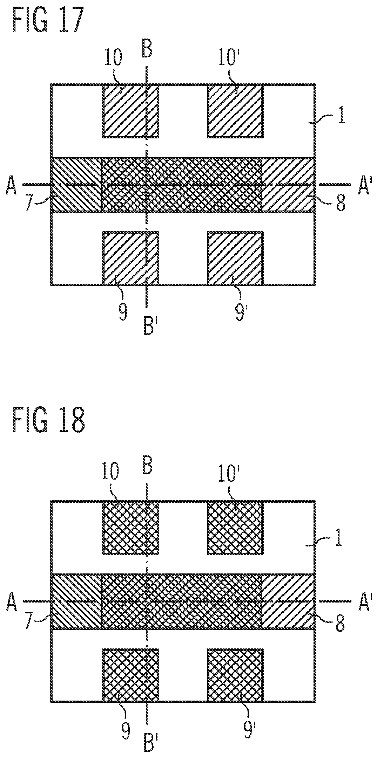

Figur 17 zeigt eine weitere Ausführungsform des elektrischen Vielschichtbauelements mit einem schematischen Aufbau der Innenelektroden, wobei der Aufbau der Innenelektroden ähnlich zu der Ausführungsform des elektrischen Vielschichtbauelements nach Figur 16a ist. Das elektrische Vielschichtbauelement nach Figur 17 weist jedoch zusätzlich zwei vierte Innenelektroden 10, 10' auf, die sich von den Seiten des Grundkörpers 1 erstrecken, die der Seite mit den dritten Innenelektroden 9, 9' gegenüberliegt. Die vierten Innenelektroden 10, 10' sind in der gleichen Elektrodenschicht wie die zweite 8 und die dritten Innenelektroden 9, 9' angeordnet. Die zwei vierten Innenelektroden 10, 10' sind jeweils voneinander und von der zweiten Innenelektrode 8 beabstandet. Einen Schnitt durch das Bauelement entlang der Schnittachse A, A' entspricht der Figur 4b, ein Schnitt entlang der Schnittachse B, B' entspricht der Figur 6b.

Figur 18 zeigt einen schematischen Aufbau der Innenelektroden eines weiteren Ausführungsbeispiels des elektrischen Vielschichtbauelements. Der Grundkörper 1 des elektrischen Vielschichtbauelements weist erste 7 und zweite 8 Innenelektroden auf, die in unterschiedlichen Elektrodenschichten des Grundkörpers 1 angeordnet sind und einander wenigstens teilweise überlappen. Der Grundkörper 1 des elektrischen Vielschichtbauelements weist zwei voneinander beabstandete dritte Innenelektroden 9, 9' sowie vierte Innenelektroden 10, 10' auf. Einen Schnitt durch das Bauelement entlang der Schnittachse A, A' entspricht der Figur 4b, ein Schnitt entlang der Schnittachse B, B' entspricht der Figur 4c.

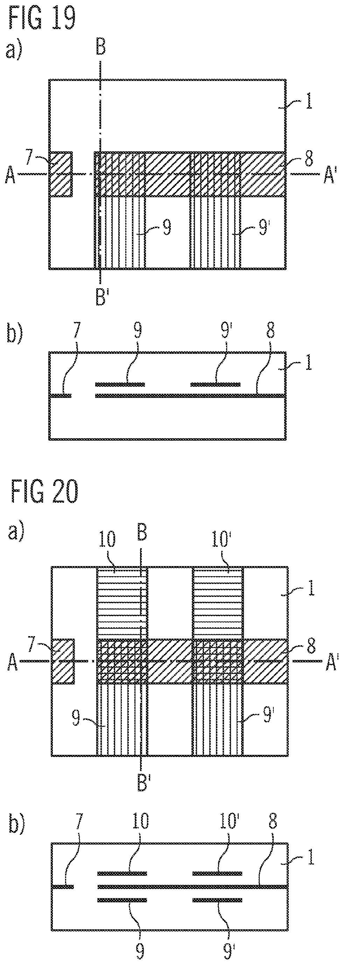

Figur 19a zeigt schematisch den Aufbau der Innenelektroden einer weiteren Ausführungsform des elektrischen Vielschichtbauelements. Der Grundkörper 1 des elektrischen Vielschichtbauelements weist eine erste 7 und eine zweite 8 Innenelektrode auf, die in der gleichen Schicht des Grundkörpers 1 angeordnet sind und voneinander beabstandet sind. Das elektrische Vielschichtbauelement weist zwei dritte Innenelektroden 9, 9' auf, die in einer weiteren Elektrodenschicht des Grundkörpers 1 angeordnet sind. Die dritten Innenelektroden 9, 9' sind jeweils voneinander beabstandet und überlappen wenigstens teilweise mit der zweiten Innenelektrode 8.

Figur 19b zeigt einen Schnitt durch das Bauelement entlang der Schnittachse A, A'.

Figur 20a zeigt einen schematischen Aufbau der Innenelektroden eines weiteren Ausführungsbeispiels des elektrischen Vielschichtbauelements. Der Aufbau des elektrischen Vielschichtbauelements ist ähnlich zu der Ausführungsform nach Figur 19a, wobei das elektrische Vielschichtbauelement in Figur 20a zusätzlich zwei vierte Innenelektroden 10, 10' aufweist, die in einer weiteren Elektrodenschicht des Grundkörpers 1 angeordnet sind und mit der zweiten Innenelektrode 8 wenigstens teilweise überlappen.

Die Figur 20b zeigt einen Schnitt durch das Bauelement entlang der Schnittachse A, A'. Im Gegensatz zu der Ausführungsform nach Figur 19b sind in einer weiteren Schicht des Grundkörpers 1 zwei vierte Innenelektroden 10, 10' angeordnet, die voneinander beabstandet sind und wenigstens teilweise mit der zweiten Innenelektrode 8 überlappen. Die zweite Innenelektrode 8 ist in einer Schicht des Grundkörpers 1 angeordnet, die sich zwischen der Schicht der dritten 9, 9' Innenelektroden und der Schicht der vierten 10, 10' Innenelektroden befindet.

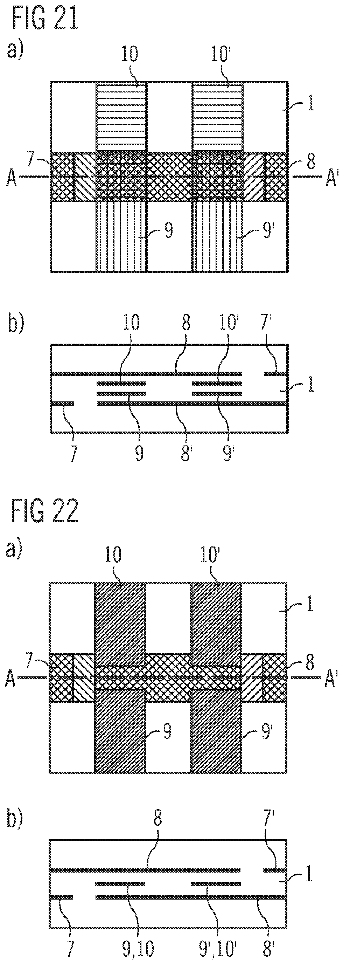

Figur 21a zeigt schematisch den Aufbau der Innenelektrode einer weiteren Ausführungsform des elektrischen Vielschichtbauelements. Das elektrische Vielschichtbauelement weist einen ähnlichen Aufbau der Innenelektroden auf wie in der Ausführungsform des elektrischen Vielschichtbauelements nach Figur 18a. Das elektrische Vielschichtbauelement nach Figur 19a weist jeweils zwei erste 7, 7' und zwei zweite 8, 8' Innenelektroden auf, wobei jeweils eine erste 7 bzw. 7' und zweite 8 bzw. 8' Innenelektrode in einer gemeinsamen Elektrodenschicht angeordnet sind.

Figur 21b zeigt einen Schnitt durch das Bauelement entlang der Schnittachse A, A'. Der Grundkörper 1 des elektrischen Vielschichtbauelements weist zwei erste Innenelektroden 7, 7' auf, die sich von den gegenüberliegenden Seiten des Grundkörpers 1 erstrecken und jeweils mit einer zweiten Innenelektrode 8, 8' in der gleichen Elektrodenschicht angeordnet sind und von diesen beabstandet sind. Die ersten Innenelektroden 7, 7' überlappen wenigstens teilweise mit einer der zweiten Innenelektrode 8, 8' in einer weiteren Schicht des Grundkörpers 1. Zwischen den ersten 7, 7' und den zweiten 8, 8' Innenelektroden sind zwei Schichten angeordnet, wobei jede der Schichten jeweils zwei voneinander beabstandete Innenelektroden umfasst, die wenigstens teilweise mit den zweiten 8, 8' Innenelektroden überlappen. In der einen Schicht sind zwei voneinander beabstandete dritte Elektroden 9, 9' angeordnet. In der weiteren Schicht sind zwei voneinander beabstandete vierte Innenelektroden 10, 10' angeordnet.

Figur 22a zeigt schematisch den Aufbau der Innenelektroden in einer weiteren Ausführungsform des elektrischen Vielschichtbauelements, wobei der Aufbau der Innenelektroden in der Draufsicht ähnlich zu dem Aufbau nach der Ausführungsform nach Figur 19a ist. Die dritten 9, 9' und die vierten 10, 10' Innenelektroden sind im Unterschied zu der Ausführungsform nach Figur 21a jedoch in der gleichen Schicht des Grundkörpers 1 angeordnet, wie in Figur 22b dargestellt ist.

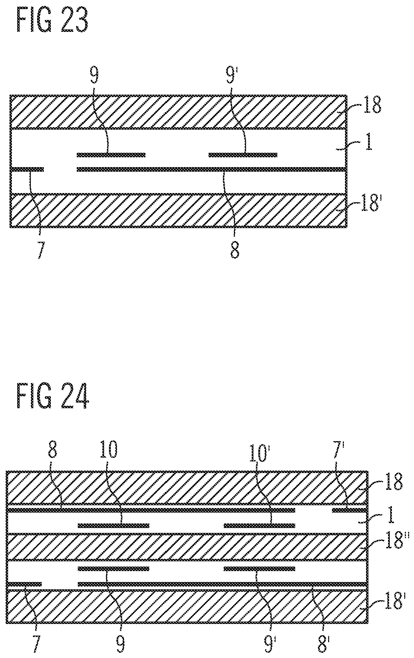

Figur 23 zeigt einen Querschnitt durch ein elektrisches Vielschichtbauelement. Der Aufbau der Innenelektroden ähnelt dem Aufbau der Innenelektroden, der in Figur 19b dargestellt ist. Das elektrische Vielschichtbauelement in der Figur 23 ist in Dickenrichtung durch zwei dielektrische Schichten 18, 18' abgeschlossen.

Figur 24 zeigt einen Querschnitt durch ein elektrisches Vielschichtbauelement, wobei der Aufbau der Innenelektroden dem Aufbau der Innenelektroden in der Ausführungsform des elektrischen Vielschichtbauelements in Figur 21b ähnelt. Zwischen der Schicht mit den dritten Innenelektroden 9, 9' und der Schicht mit den vierten Innenelektrode 10, 10' ist eine dielektrische Schicht 18" angeordnet. In Dickenrichtung ist der Grundkörper 1 des elektrischen Vielschichtbauelements jeweils durch eine dielektrische Schicht 18, 18' abgeschlossen.

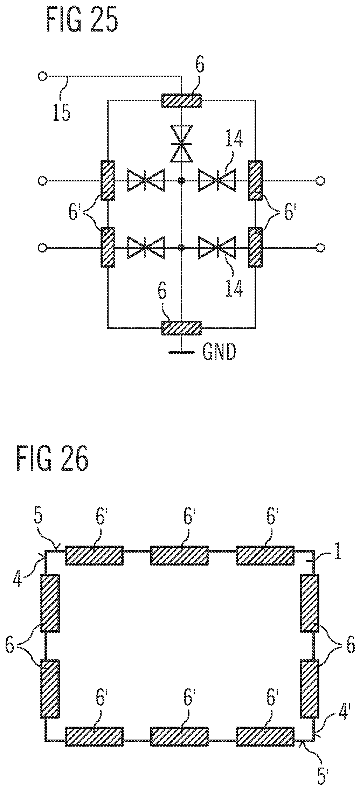

Figur 25 zeigt eine schematische Schaltungsanordnung eines elektrischen Vielschichtbauelements, das in der dargestellten Ausführungsform fünf elektrische Funktionseinheiten aufweist. Die elektrischen Funktionseinheiten sind in der dargestellten Ausführungsform als Varistoren 14 ausgeführt; es ist jedoch auch möglich, dass sie als Kondensatoren ausgeführt sind. Des Weiteren kann das Vielschichtbauelement sowohl Kondensatoren als auch Varistoren aufweisen. In der dargestellten Ausführungsform weist das elektrische Vielschichtbauelement sechs Außenelektroden 6, 6' auf, wobei zwei Außenelektroden 6 an den Stirnseiten des elektrischen Vielschichtbauelements und jeweils zwei Außenelektroden 6' an den Seitenflächen des elektrischen Vielschichtbauelements angeordnet sind. Eine stirnseitig angeordnete Außenelektrode 6 des elektrischen Vielschichtbauelements ist mit Masse GND verbunden. Eine weitere stirnseitig angeordnete Außenelektrode 6 ist mit einer spannungsführenden Leitung 15 verbunden. Die an den Seitenflächen des Vielschichtbauelements angeordneten Außenelektroden 6' sind vorzugsweise mit signalführenden Leitungen verbunden. Die Reihenfolge der Außenelektroden 6' an den Seitenflächen kann beliebig gewählt werden.

Figur 26 zeigt die Anordnung der Außenelektroden 6, 6' einer Ausführungsform des elektrischen Vielschichtbauelements. Der Grundkörper 1 des elektrischen Vielschichtbauelements weist jeweils zwei an den Stirnseiten 4, 4' angeordnete Außenelektroden 6 auf. Die stirnseitig 4, 4' angeordneten Außenelektroden 6 sind jeweils mit einer ersten beziehungsweise einer zweiten Innenelektrode des elektrischen Vielschichtbauelements verbunden. Die an den Seitenflächen 5, 5' des Grundkörpers 1 angeordneten Außenelektroden 6' sind jeweils mit dritten beziehungsweise vierten Innenelektroden verbunden. Das elektrische Vielschichtbauelement weist vorzugsweise einen symmetrischen Aufbau auf.

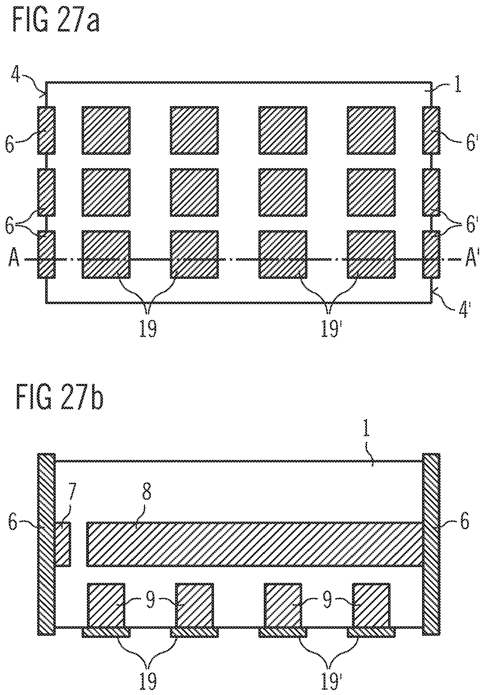

Figur 27a zeigt die Anordnung der Außenelektroden einer Ausführungsform des elektrischen Vielschichtbauelements von der Unterseite des Grundkörpers 1. Der Grundkörper 1 weist an den Stirnseiten 4, 4' jeweils drei Außenelektroden 6, 6' auf. Auf der Unterseite des Grundkörpers 1 sind drei Reihen mit jeweils vier Außenelektroden angeordnet, die in der dargestellten Ausführungsform als rechteckige Kontaktflächen 19, 19' ausgeführt sind. Die Kontaktflächen 19, 19' bilden zusammen ein Land Grid Array (LGA) auf der Unterseite des Grundkörpers 1.

Figur 27b zeigt einen Schnitt durch das Bauelement entlang der Schnittachse A, A'. Der Schnitt durch das elektrische Vielschichtbauelement zeigt eine erste 7 und eine zweite 8 Innenelektrode auf, die sich von gegenüberliegenden Stirnseiten des Grundkörpers 1 erstrecken. Die erste 7 und zweite 8 Innenelektrode sind in der gleichen Schicht angeordnet und lateral voneinander beabstandet. Zu jedem Paar erster 7 und zweiter 8 Innenelektroden erstrecken sich von der Unterseite des Grundkörpers 1 vier dritte Innenelektroden 9. Die dritten Innenelektroden 9 und die erste 7 und die zweite 8 Innenelektrode sind in der gleichen Elektrodenschicht angeordnet und von diesen lateral beabstandet sind. Die Elektrodenschichten des Bauelements sind senkrecht zu der Unterseite des Grundkörpers 1 angeordnet und erstrecken sich entlang der Schnittachse A-A'.

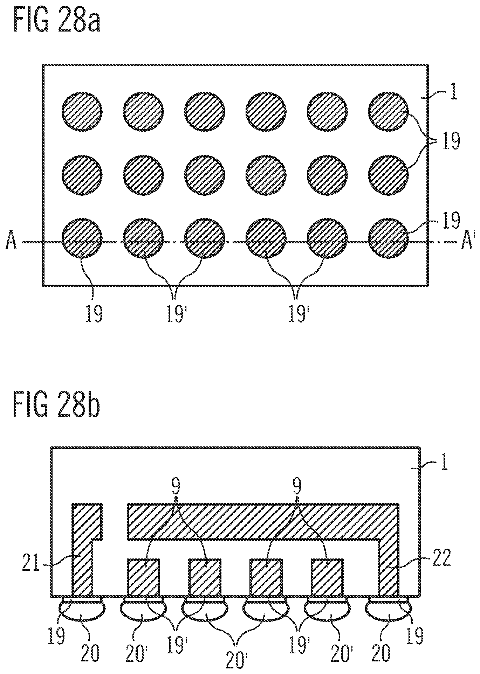

Figur 28a zeigt die Anordnung der Außenelektroden eines elektrischen Vielschichtbauelements auf der Unterseite des Grundkörpers 1. Die Außenelektroden des elektrischen Vielschichtbauelements sind in der dargestellten Ausführungsform als Ball Grid Array (BGA) ausgeführt. Die einzelnen runden, bzw. ovalen Kontaktflächen 19, 19' sind jeweils in drei Reihen zu sechs Kontaktflächen 19, 19' angeordnet.

Figur 28b zeigt einen Schnitt durch das Bauelement entlang der Schnittachse A, A'. Der Grundkörper 1 weist eine erste 21 und eine zweite 22 Innenelektrode in L-Form auf, die lateral voneinander beabstandet sind. Die Kontaktierung der ersten 21 und der zweiten 22 Innenelektrode erfolgt von der Unterseite des Grundkörpers 1. Von der Unterseite des Grundkörpers 1 erstrecken sich in der dargestellten Ansicht vier voneinander beabstandete dritte Innenelektroden 9. Die erste 21 sowie die zweite 22 Innenelektrode sind zusammen mit den dritten Innenelektroden 9 in der gleichen Elektrodenschicht des elektrischen Vielschichtbauelements angeordnet. Die Elektrodenschichten des Grundkörpers 1 sind senkrecht zur Unterseite des Vielschichtbauelements angeordnet und erstrecken sich entlang der Schnittachse A, A'. Die Innenelektroden 9 sind von der ersten 21 und zweiten 22 Innenelektrode lateral beabstandet. Die Außenelektroden sind in der Form von runden Kontaktflächen 19, 19' ausgeführt, auf denen Lötperlen 20, 20' aufgebracht sind. Die Kontaktflächen 19 der ersten 7 und zweiten 8 Innenelektrode weisen in der Figur 28b einen kleineren Durchmesser auf als die Kontaktflächen 19' der dritten Innenelektroden 9.

Obwohl in den Ausführungsbeispielen nur eine beschränkte Anzahl möglicher Weiterbildungen der Erfindungen beschrieben werden konnte, ist die Erfindung nicht auf diese beschränkt. Es ist prinzipiell möglich, dass das elektrische Vielschichtbauelement eine Vielzahl von elektrischen Funktionseinheiten aufweist, die als Varistor oder als Kondensator ausgeführt sind, wobei die Anordnung der Funktionseinheiten, der Innenelektroden und der Außenelektroden vorzugsweise symmetrisch ausgeführt ist. Der Anzahl der elektrischen Funktionseinheiten wird nur durch die Größe des Vielschichtbauelements eine Grenze gesetzt.

### Bezugszeichenliste

- 1: Grundkörper
- 2: Keramikschicht
- 3: Elektrodenschicht
- 4, 4': Stirnfläche
- 5, 5': Seitenfläche
- 6, 6': Außenelektrode
- 7, 7': erste Innenelektrode, ausgehend von einer Stirnseite
- 8, 8': zweite Innenelektrode, ausgehend von einer Stirnseite
- 9, 9': dritte Innenelektrode, ausgehend von einer Seitenfläche
- 10, 10': vierte Innenelektrode, ausgehend von einer Seitenfläche
- 11: erste elektrische Funktionseinheit
- 12: zweite elektrische Funktionseinheit
- 13: dritte elektrische Funktionseinheit
- 14: Varistor
- 15: spannungsführende Leitung
- GND: Masseanschluss
- a: erster Abstand
- b: zweiter Abstand
- c: dritter Abstand
- 18: dielektrische Schicht
- 19, 19': Kontaktfläche
- 20, 20': Lötperle
- 21: erste Innenelektrode
- 22: zweite Innenelektrode
- A, A': Schnittachse
- B, B': Schnittachse

## Patentansprüche

1. Elektrisches Vielschichtbauelement,
- mit einem monolithischen Grundkörper (1), umfassend alternierend übereinander angeordnet mehrere Keramikschichten (2) und wenigstens eine Elektrodenschicht (3),
- bei dem der Grundkörper (1) zwei einander gegenüberliegende Stirnflächen (4, 4') und zwei einander gegenüberliegende Seitenflächen (5, 5') aufweist,
- mit einer Mehrzahl Außenelektroden (6, 6') und wenigstens drei Innenelektroden (7, 8, 9),
- wobei jeder Innenelektrode (7, 8, 9) jeweils eine Außenelektrode (6, 6') zugeordnet ist,
- wobei wenigstens eine von einer Stirnfläche (4, 4') ausgehende erste Innenelektrode (7) und wenigstens eine von einer gegenüberliegenden Stirnfläche (4, 4') ausgehende zweite Innenelektrode (8) einen ersten Abstand (a) zueinander aufweisen und eine erste elektrische Funktionseinheit (11), die die Funktion eines Kondensators oder eines Varistors (14) aufweist, bilden und
- wobei von einer Seitenfläche (5, 5') wenigstens eine dritte Innenelektrode (9) ausgeht, die zu der zweiten Innenelektrode (8) einen zweiten Abstand (b) aufweist und mit der zweiten Innenelektrode (8) eine zweite elektrische Funktionseinheit (12), die die Funktion eines Kondensators oder eines Varistors (14) aufweist, bildet, **dadurch gekennzeichnet, dass**
die Innenelektroden (7, 8), die die erste Funktionseinheit (11) bilden, die Innenelektroden (8, 9), die die zweite Funktionseinheit (11) bilden, oder die Innenelektroden (7, 8, 9), die die erste Funktionseinheit (11) und die zweite Funktionseinheit (12) bilden, in derselben Elektrodenschicht (3) angeordnet sind.

2. Vielschichtbauelement nach Anspruch 1, bei dem
die erste (7) und die zweite (8) Innenelektrode in verschiedenen Elektrodenschichten (3) angeordnet sind und sich überlappen.

3. Vielschichtbauelement nach Anspruch 1 oder 2, bei dem von einer Seitenfläche (5, 5') eine weitere Innenelektrode (9', 10) ausgeht und
die dritte Innenelektrode (9) und die weitere Innenelektrode (9', 10) in derselben Elektrodenschicht (3) angeordnet sind.

4. Vielschichtbauelement nach Anspruch 3, bei dem
die weitere Innenelektrode (9', 10) eine weitere dritte Innenelektrode ist und
die dritte Innenelektrode (9) und die weitere dritte Innenelektrode (9', 10) von derselben Seitenfläche (5, 5') ausgehen und in derselben Elektrodenschicht (3) wie die zweite Innenelektrode (8) angeordnet sind.

5. Vielschichtbauelement nach Anspruch 3, bei dem
die weitere Innenelektrode (9', 10) eine vierte Innenelektrode (10) ist, die in einem dritten Abstand (c) von der zweiten Innenelektrode (8) angeordnet ist und mit der zweiten Innenelektrode (8) eine dritte elektrische Funktionseinheit (13) bildet, und
die dritte Innenelektrode (9) und die vierte Innenelektrode (10) von einander gegenüberliegenden Seitenfläche (5, 5') ausgehen und in derselben Elektrodenschicht (3) wie die zweite Innenelektrode (8) angeordnet sind.

6. Vielschichtbauelement nach Anspruch 5, bei dem
die erste, die zweite, die dritte und die vierte Innenelektrode (7, 8, 9, 10) in derselben Elektrodenschicht (3) angeordnet sind.

7. Vielschichtbauelement nach Anspruch 5 oder 6, bei dem
eine weitere dritte Innenelektrode (9') und eine weitere vierte Innenelektrode (10'), die von einander gegenüberliegenden Seitenfläche (5, 5') ausgehen, in derselben Elektrodenschicht (3) wie die zweite, die dritte und die vierte Innenelektrode (8, 9, 10) angeordnet sind.

8. Vielschichtbauelement nach Anspruch 6, bei dem
vier weitere Innenelektroden (7', 8', 9, 10) in einer weiteren Elektrodenschicht (3) angeordnet sind.

9. Vielschichtbauelement nach Anspruch 5, bei dem
die erste Innenelektrode (7) in einer weiteren Elektrodenschichten (3) angeordnet ist und
zwei weitere Innenelektroden (9, 10) in der weiteren Elektrodenschicht (3) angeordnet sind.

10. Vielschichtbauelement nach Anspruch 3, bei dem
die erste Innenelektrode (7) und die zweite Innenelektrode (8) in verschiedenen Elektrodenschichten (3) angeordnet sind und sich überlappen,
die weitere Innenelektrode (9', 10) eine vierte Innenelektrode (10) ist,
in der Elektrodenschicht (3) der ersten Innenelektrode (7) eine weitere zweite Innenelektrode (8') angeordnet ist,
in der Elektrodenschicht (3) der zweiten Innenelektrode (8) eine weitere erste Innenelektrode (7') angeordnet ist,
die dritte Innenelektrode (9) und die vierte Innenelektrode (10) in einer weiteren Elektrodenschicht (3) zwischen die zweite Innenelektrode (8) und die weitere zweite Innenelektrode (8') reichend angeordnet sind.

11. Vielschichtbauelement nach Anspruch 3, bei dem
die erste Innenelektrode (7) und die zweite Innenelektrode (8) in verschiedenen Elektrodenschichten (3) angeordnet sind und sich überlappen,
die weitere Innenelektrode (9', 10) eine vierte Innenelektrode (10) ist,
in der Elektrodenschicht (3) der ersten Innenelektrode (7) eine weitere zweite Innenelektrode (8') angeordnet ist,
in der Elektrodenschicht (3) der zweiten Innenelektrode (8) eine weitere erste Innenelektrode (7') angeordnet ist,
eine weitere dritte Innenelektrode (9') vorhanden ist, die dritte Innenelektrode (9) und die weitere dritte Innenelektrode (9') von derselben Seitenfläche (5, 5') ausgehen und in derselben Elektrodenschicht (3) zwischen der Elektrodenschicht (3) der ersten Innenelektrode (7) und der weiteren zweiten Innenelektrode (8') und der Elektrodenschicht (3) der weiteren ersten Innenelektrode (7') und der zweiten Innenelektrode (8) angeordnet sind, eine weitere vierte Innenelektrode (10') vorhanden ist und
die vierte Innenelektrode (10) und die weitere vierte Innenelektrode (10') von derselben Seitenfläche (5, 5') ausgehen und in derselben Elektrodenschicht (3) zwischen der Elektrodenschicht (3) der dritten Innenelektrode (9) und der weiteren dritten Innenelektrode (9') und der Elektrodenschicht (3) der weiteren ersten Innenelektrode (7') und der zweiten Innenelektrode (8) angeordnet sind.

12. Vielschichtbauelement nach Anspruch 3, bei dem
die erste Innenelektrode (7) und die zweite Innenelektrode (8) in verschiedenen Elektrodenschichten (3) angeordnet sind und sich überlappen,
die weitere Innenelektrode (9', 10) eine vierte Innenelektrode (10) ist,
in der Elektrodenschicht (3) der ersten Innenelektrode (7) eine weitere zweite Innenelektrode (8') angeordnet ist,
in der Elektrodenschicht (3) der zweiten Innenelektrode (8) eine weitere erste Innenelektrode (7') angeordnet ist,
eine weitere dritte Innenelektrode (9') vorhanden ist, die dritte Innenelektrode (9) und die weitere dritte Innenelektrode (9') von derselben Seitenfläche (5, 5') ausgehen,
eine weitere vierte Innenelektrode (10') vorhanden ist, die vierte Innenelektrode (10) und die weitere vierte Innenelektrode (10') von derselben Seitenfläche (5, 5') ausgehen und
die dritte Innenelektrode (9), die weitere dritte Innenelektrode (9'), die vierte Innenelektrode (10) und die weitere vierte Innenelektrode (10') in derselben Elektrodenschicht (3) zwischen der zweiten Innenelektrode (8) und der weiteren zweiten Innenelektrode (8') angeordnet sind.

13. Vielschichtbauelement nach Anspruch 3, bei dem
die weitere Innenelektrode (9', 10) eine weitere dritte Innenelektrode (9') ist und
die dritte Innenelektrode (9) und die weitere dritte Innenelektrode (9') von derselben Seitenfläche (5, 5') ausgehen und in derselben Elektrodenschicht (3), die von der Elektrodenschicht (3) der zweiten Innenelektrode (8) verschieden ist, angeordnet sind.

14. Vielschichtbauelement nach Anspruch 13, bei dem
eine vierte Innenelektrode (10) und eine weitere vierte Innenelektrode (10') in derselben Elektrodenschicht (3), die von der Elektrodenschicht (3) der zweiten Innenelektrode (8) und von der Elektrodenschicht (3) der dritten und der weiteren dritten Innenelektrode (9, 9') verschieden ist, angeordnet sind.

15. Vielschichtbauelement nach Anspruch 13, bei dem
eine vierte Innenelektrode (10) und eine weitere vierte Innenelektrode (10') in derselben Elektrodenschicht (3) wie die dritte und die weitere dritte Innenelektrode (9, 9') angeordnet sind.

## Claims

1. Electrical multilayer component,
- comprising a monolithic main body (1), comprising a plurality of ceramic layers (2) and at least one electrode layer (3), arranged alternately one above another,
- wherein the main body (1) has two end surfaces (4, 4') lying opposite one another and two side surfaces (5, 5') lying opposite one another,
- comprising a plurality of external electrodes (6, 6') and at least three internal electrodes (7, 8, 9),
- wherein each internal electrode (7, 8, 9) is assigned a respective external electrode (6, 6'),
- wherein at least one first internal electrode (7) proceeding from an end surface (4, 4') and at least one second internal electrode (8) proceeding from an opposite end surface (4, 4') are at a first distance (a) from one another and form a first electrical functional unit (11), which has the function of a capacitor or of a varistor (14), and
- wherein at least one third internal electrode (9) proceeds from a side surface (5, 5'), said at least one third internal electrode being at a second distance (b) from the second internal electrode (8) and forming with the second internal electrode (8) a second electrical functional unit (12), which has the function of a capacitor or of a varistor (14),
**characterized in that**
the internal electrodes (7, 8) forming the first functional unit (11), the internal electrodes (8, 9) forming the second functional unit (11) or the internal electrodes (7, 8, 9) forming the first functional unit (11) and the second functional unit (12) are arranged in the same electrode layer (3).

2. Multilayer component according to Claim 1, wherein the first (7) and the second (8) internal electrode are arranged in different electrode layers (3) and overlap.

3. Multilayer component according to Claim 1 or 2, wherein
a further internal electrode (9', 10) proceeds from a side surface (5, 5'), and
the third internal electrode (9) and the further internal electrode (9', 10) are arranged in the same electrode layer (3).

4. Multilayer component according to Claim 3, wherein the further internal electrode (9', 10) is a further third internal electrode, and
the third internal electrode (9) and the further third internal electrode (9', 10) proceed from the same side surface (5, 5') and are arranged in the same electrode layer (3) as the second internal electrode (8).

5. Multilayer component according to Claim 3, wherein the further internal electrode (9', 10) is a fourth internal electrode (10), which is arranged at a third distance (c) from the second internal electrode (8) and forms with the second internal electrode (8) a third electrical functional unit (13), and
the third internal electrode (9) and the fourth internal electrode (10) proceed from mutually opposite side surfaces (5, 5') and are arranged in the same electrode layer (3) as the second internal electrode (8).

6. Multilayer component according to Claim 5, wherein the first, second, third and fourth internal electrodes (7, 8, 9, 10) are arranged in the same electrode layer (3) .

7. Multilayer component according to Claim 5 or 6, wherein
a further third internal electrode (9') and a further fourth internal electrode (10'), which proceed from mutually opposite side surfaces (5, 5'), are arranged in the same electrode layer (3) as the second, third and fourth internal electrodes (8, 9, 10).

8. Multilayer component according to Claim 6, wherein four further internal electrodes (7', 8', 9, 10) are arranged in a further electrode layer (3).

9. Multilayer component according to Claim 5, wherein the first internal electrode (7) is arranged in a further electrode layer (3), and
two further internal electrodes (9, 10) are arranged in the further electrode layer (3).

10. Multilayer component according to Claim 3, wherein the first internal electrode (7) and the second internal electrode (8) are arranged in different electrode layers (3) and overlap,
the further internal electrode (9', 10) is a fourth internal electrode (10),
a further second internal electrode (8') is arranged in the electrode layer (3) of the first internal electrode (7),
a further first internal electrode (7') is arranged in the electrode layer (3) of the second internal electrode (8),
the third internal electrode (9) and the fourth internal electrode (10) are arranged in a further electrode layer (3) in a manner extending between the second internal electrode (8) and the further second internal electrode (8').

11. Multilayer component according to Claim 3, wherein the first internal electrode (7) and the second internal electrode (8) are arranged in different electrode layers (3) and overlap,
the further internal electrode (9', 10) is a fourth internal electrode (10),
a further second internal electrode (8') is arranged in the electrode layer (3) of the first internal electrode (7),
a further first internal electrode (7') is arranged in the electrode layer (3) of the second internal electrode (8),
a further third internal electrode (9') is present,
the third internal electrode (9) and the further third internal electrode (9') proceed from the same side surface (5, 5') and are arranged in the same electrode layer (3) between the electrode layer (3) of the first internal electrode (7) and the further second internal electrode (8') and the electrode layer (3) of the further first internal electrode (7') and the second internal electrode (8),
a further fourth internal electrode (10') is present, and the fourth internal electrode (10) and the further fourth internal electrode (10') proceed from the same side surface (5, 5') and are arranged in the same electrode layer (3) between the electrode layer (3) of the third internal electrode (9) and the further third internal electrode (9') and the electrode layer (3) of the further first internal electrode (7') and the second internal electrode (8) .

12. Multilayer component according to Claim 3, wherein the first internal electrode (7) and the second internal electrode (8) are arranged in different electrode layers (3) and overlap,
the further internal electrode (9', 10) is a fourth internal electrode (10),
a further second internal electrode (8') is arranged in the electrode layer (3) of the first internal electrode (7),
a further first internal electrode (7') is arranged in the electrode layer (3) of the second internal electrode (8),
a further third internal electrode (9') is present,
the third internal electrode (9) and the further third internal electrode (9') proceed from the same side surface (5, 5'),
a further fourth internal electrode (10') is present, the fourth internal electrode (10) and the further fourth internal electrode (10') proceed from the same side surface (5, 5'), and
the third internal electrode (9), the further third internal electrode (9'), the fourth internal electrode (10) and the further fourth internal electrode (10') are arranged in the same electrode layer (3) between the second internal electrode (8) and the further second internal electrode (8').

13. Multilayer component according to Claim 3, wherein the further internal electrode (9', 10) is a further third internal electrode (9'), and
the third internal electrode (9) and the further third internal electrode (9') proceed from the same side surface (5, 5') and are arranged in the same electrode layer (3), which is different from the electrode layer (3) of the second internal electrode (8).

14. Multilayer component according to Claim 13, wherein a fourth internal electrode (10) and a further fourth internal electrode (10') are arranged in the same electrode layer (3), which is different from the electrode layer (3) of the second internal electrode (8) and from the electrode layer (3) of the third and further third internal electrodes (9, 9').

15. Multilayer component according to Claim 13, wherein a fourth internal electrode (10) and a further fourth internal electrode (10') are arranged in the same electrode layer (3) as the third and further third internal electrodes (9, 9').

## Revendications

1. Composant électrique multicouche,
- comprenant un corps de base (1) monolithique qui comporte plusieurs couches en céramique (2) et au moins une couche d'électrodes (3) disposées les unes au-dessus des autres en alternance,
- avec lequel le corps de base (1) possède deux surfaces frontales (4, 4') mutuellement opposées et deux surfaces latérales (5, 5') mutuellement opposées,
- comprenant une pluralité d'électrodes extérieures (6, 6') et au moins trois électrodes intérieures (7, 8, 9),
- une électrode extérieure (6, 6') étant respectivement associée à chaque électrode intérieure (7, 8, 9),
- au moins une première électrode intérieure (7) émanant d'une surface frontale (4, 4') et au moins une deuxième électrode intérieure (8) émanant d'une surface frontale (4, 4') opposée possédant un premier écart (a) entre elles et formant une première unité fonctionnelle électrique (11), laquelle possède la fonction d'un condensateur ou d'une varistance (14), et
- au moins une troisième électrode intérieure (9) émanant d'une surface latérale (5, 5'), laquelle possède un deuxième écart (b) par rapport à la deuxième électrode intérieure (8) et formant avec la deuxième électrode intérieure (8) une deuxième unité fonctionnelle (12), laquelle possède la fonction d'un condensateur ou d'une varistance (14),
**caractérisé en ce que**
les électrodes intérieures (7, 8) qui forment la première unité fonctionnelle (11), les électrodes intérieures (8, 9) qui forment la deuxième unité fonctionnelle (11) ou les électrodes intérieures (7, 8, 9) qui forment la première unité fonctionnelle (11) et la deuxième unité fonctionnelle (12) étant disposées dans la même couche d'électrodes (3).

2. Composant électrique multicouche selon la revendication 1, avec lequel la première (7) et la deuxième (8) électrode intérieure sont disposées dans des couches d'électrodes (3) différentes et se chevauchent.

3. Composant électrique multicouche selon la revendication 1 ou 2, avec lequel une électrode intérieure supplémentaire (9', 10) émane d'une surface latérale (5, 5') et
la troisième électrode intérieure (9) et l'électrode intérieure supplémentaire (9', 10) sont disposées dans la même couche d'électrodes (3).

4. Composant électrique multicouche selon la revendication 3, avec lequel l'électrode intérieure supplémentaire (9', 10) est une troisième électrode supplémentaire et
la troisième électrode intérieure (9) et la troisième électrode supplémentaire (9', 10) émanent de la même surface latérale (5, 5') et sont disposées dans la même couche d'électrodes (3) que la deuxième électrode intérieure (8).

5. Composant électrique multicouche selon la revendication 3, avec lequel l'électrode intérieure supplémentaire (9', 10) est une quatrième électrode intérieure (10) qui est disposée à un troisième écart (c) de la deuxième électrode intérieure (8) et forme avec la deuxième électrode intérieure (8) une troisième unité fonctionnelle (13), et
la troisième électrode intérieure (9) et la quatrième électrode intérieure (10) émanent de surfaces latérales (5, 5') mutuellement opposées et sont disposées dans la même couche d'électrodes (3) que la deuxième électrode intérieure (8).

6. Composant électrique multicouche selon la revendication 5, avec lequel la première, la deuxième, la troisième et la quatrième électrodes intérieures (7, 8, 9, 10) sont disposées dans la même couche d'électrodes (3).

7. Composant électrique multicouche selon la revendication 5 ou 6, avec lequel une troisième électrode intérieure supplémentaire (9') et une quatrième électrode intérieure supplémentaire (10'), lesquelles émanent de surfaces latérales (5, 5') mutuellement opposées, sont disposées dans la même couche d'électrodes (3) que la deuxième, la troisième et la quatrième électrodes intérieures (8, 9, 10).

8. Composant électrique multicouche selon la revendication 6, avec lequel quatre électrodes intérieures supplémentaires (7', 8', 9, 10) sont disposées dans une même couche d'électrodes (3) supplémentaire.

9. Composant électrique multicouche selon la revendication 5, avec lequel la première électrode intérieure (7) est disposée dans une couche d'électrodes (3) supplémentaire et
deux électrodes intérieures supplémentaires (9, 10) sont disposées dans la même couche d'électrodes (3) supplémentaire.

10. Composant électrique multicouche selon la revendication 3, avec lequel la première électrode intérieure (7) et la deuxième électrode intérieure (8) sont disposées dans des couches d'électrodes (3) différentes et se chevauchent,
l'électrode intérieure supplémentaire (9', 10) est une quatrième électrode intérieure (10),
une deuxième électrode intérieure supplémentaire (8') est disposée dans la couche d'électrodes (3) de la première électrode intérieure (7),
une première électrode intérieure supplémentaire (7') est disposée dans la couche d'électrodes (3) de la deuxième électrode intérieure (8),
la troisième électrode intérieure (9) et la quatrième électrode intérieure (10) sont disposées dans une couche d'électrodes (3) supplémentaire de manière à s'étendre entre la deuxième électrode intérieure (8) et la deuxième électrode intérieure supplémentaire (8').

11. Composant électrique multicouche selon la revendication 3, avec lequel la première électrode intérieure (7) et la deuxième électrode intérieure (8) sont disposées dans des couches d'électrodes (3) différentes et se chevauchent,
l'électrode intérieure supplémentaire (9', 10) est une quatrième électrode intérieure (10),
une deuxième électrode intérieure supplémentaire (8') est disposée dans la couche d'électrodes (3) de la première électrode intérieure (7),
une première électrode intérieure supplémentaire (7') est disposée dans la couche d'électrodes (3) de la deuxième électrode intérieure (8),
une troisième électrode intérieure supplémentaire (9') est présente,
la troisième électrode intérieure (9) et la troisième électrode intérieure supplémentaire (9') émanent de la même surface latérale (5, 5') et sont disposées dans la même couche d'électrodes (3) entre la couche d'électrodes (3) de la première électrode intérieure (7) et de la deuxième électrode intérieure supplémentaire (8') et la couche d'électrodes (3) de la première électrode intérieure supplémentaire (7') et de la deuxième électrode intérieure (8),
une quatrième électrode intérieure supplémentaire (10') est présente et
la quatrième électrode intérieure (10) et la quatrième électrode intérieure supplémentaire (10') émanent de la même surface latérale (5, 5') et sont disposées dans la même couche d'électrodes (3) entre la couche d'électrodes (3) de la troisième électrode intérieure (9) et de la troisième électrode intérieure supplémentaire (9') et la couche d'électrodes (3) de la première électrode intérieure supplémentaire (7') et de la deuxième électrode intérieure (8).

12. Composant électrique multicouche selon la revendication 3, avec lequel la première électrode intérieure (7) et la deuxième électrode intérieure (8) sont disposées dans des couches d'électrodes (3) différentes et se chevauchent,
l'électrode intérieure supplémentaire (9', 10) est une quatrième électrode intérieure (10),
une deuxième électrode intérieure supplémentaire (8') est disposée dans la couche d'électrodes (3) de la première électrode intérieure (7),
une première électrode intérieure supplémentaire (7') est disposée dans la couche d'électrodes (3) de la deuxième électrode intérieure (8),
une troisième électrode intérieure supplémentaire (9') est présente,
la troisième électrode intérieure (9) et la troisième électrode intérieure supplémentaire (9') émanent de la même surface latérale (5, 5'),
une quatrième électrode intérieure supplémentaire (10') est présente,
la quatrième électrode intérieure (10) et la quatrième électrode intérieure supplémentaire (10') émanent de la même surface latérale (5, 5') et
la troisième électrode intérieure (9) et la troisième électrode intérieure supplémentaire (9'), la quatrième électrode intérieure (10) et la quatrième électrode intérieure supplémentaire (10') sont disposées dans la même couche d'électrodes (3) entre la deuxième électrode intérieure (8) et deuxième électrode intérieure supplémentaire (8').

13. Composant électrique multicouche selon la revendication 3, avec lequel l'électrode intérieure supplémentaire (9', 10) est une troisième électrode intérieure supplémentaire (9') et
la troisième électrode intérieure (9) et la troisième électrode intérieure supplémentaire (9') émanent de la même surface latérale (5, 5') et sont disposées dans la même couche d'électrodes (3), laquelle est différente de la couche d'électrodes (3) de la deuxième électrode intérieure (8).

14. Composant électrique multicouche selon la revendication 13, avec lequel une quatrième électrode intérieure (10) et une quatrième électrode intérieure supplémentaire (10') sont disposées dans la même couche d'électrodes (3), laquelle est différente de la couche d'électrodes (3) de la deuxième électrode intérieure (8) et de la couche d'électrodes (3) de la troisième et de la troisième électrode intérieure supplémentaire (9, 9').

15. Composant électrique multicouche selon la revendication 13, avec lequel une quatrième électrode intérieure (10) et une quatrième électrode intérieure supplémentaire (10') sont disposées dans la même couche d'électrodes (3) que la troisième et que la troisième électrode intérieure supplémentaire (9, 9').
